**Europäisches Patentamt**

**European Patent Office**

**Office européen des brevets**

(19)

(11) Veröffentlichungsnummer: **0 117 431**
**A2**

(12)

# EUROPÄISCHE PATENTANMELDUNG

(21) Anmeldenummer: **84100757.8**

(22) Anmeldetag: **21.01.84**

(51) Int. Cl.³: **C 04 B 13/14**

(30) Priorität: **29.01.83 DE 3302988**

(43) Veröffentlichungstag der Anmeldung: **05.09.84**
Patentblatt **84/36**

(84) Benannte Vertragsstaaten: **AT BE CH DE FR GB IT LI NL SE**

(71) Anmelder: **Henkel Kommanditgesellschaft auf Aktien, Postfach 1100 Henkelstrasse 67, D-4000 Düsseldorf-Holthausen (DE)**

(72) Erfinder: **Grünberger, Eberhard, Dr., Gustav-Mahler-Strasse 12, D-4010 Hilden (DE)**
Erfinder: **Bietz, Rolf, Heideweg 21, D-4019 Monheim 2 (DE)**
Erfinder: **Gardenler, Karl-Jose, Boschstrasse 99, D-4000 Düsseldorf (DE)**
Erfinder: **Ziche, Horst, Am Falder 20, D-4000 Düsseldorf 13 (DE)**

(54) **Gipsmischungen mit einem Gehalt an Stärkeethern.**

(57) Mischungen auf Basis von Gips mit nichtionischen Celluloseethern und weiteren üblichen Hilfsstoffen bzw. Füllstoffen, die zusätzlich einen Gehalt an Oxyethyl- und/oder Oxypropylgruppen und 0,05 bis 0,5, vorzugsweise 0,1 bis 0,4 (DS) Carboxylgruppen enthaltender Quellstärke in einer Menge von 0,05% bis 1,5%, insbesondere 0,1% bis 0,8%, bezogen auf Gips, aufweisen.

Henkelstraße 67
4000 Düsseldorf, den    5. Oktober 1983

HENKEL KGaA
ZR-FE/Patente
Dr.SchOe/Ge

-1-

0117431

Patentanmeldung

D 6676 EP

"Gipsmischungen mit einem Gehalt an Stärkeethern"

---

Die vorliegende Erfindung betrifft Mischungen auf Basis von Gips mit einem Gehalt an nichtionischen Celluloseethern sowie zusätzlich Stärkeethern aus Quellstärke.

Es ist bekannt, daß man erhärtenden Gipsmischungen, die für Putze geeignet sind, mit nichtionischen Celluloseethern wie Methylcellulose, Hydroxyethylcellulose, Methylhydroxyethylcellulose,oder Methylhydroxypropylcellulose versetzt. Durch diese Zusätze wird das beim Anmachen verwendete Wasser zurückgehalten, das heißt nicht so leicht an den Untergrund abgegeben, so daß es für den Abbindevorgang zur Verfügung steht und keine Rißbildung eintritt. Diese Eigenschaften des Wasserrückhaltens haben auch andere Hydrokolloide sowohl natürlicher als auch synthetischer Herkunft.

Bisher war es allerdings nicht bekannt, daß trotz des gegebenen Wasserbindevermögens von Stärkeprodukten diese für den genannten Zweck der Wasserrückhaltung in Gipsmassen geeignet wären. Eine Verbesserung der Verarbeitung durch Verringerung der Klebrigkeit oder auch durch Erhöhung des Standvermögens war allerdings bekannt.

. . .

Aufgabe der vorliegenden Erfindung war es, solche Stärkederivate zu finden, die in der Lage sind, außer den
bekannten, günstigen Eigenschaften zusätzlich noch ein
eigenes Wasserrückhaltevermögen zu haben. Eine weitere
Aufgabe der Erfindung war es, Stärkederivate zu finden,
die zumindest teilweise in der Lage sind, Celluloseether hinsichtlich der Wasserrückhaltung zu ersetzen.
Weiterhin sollte damit auch eine Möglichkeit geschaffen
werden, auf die zusätzliche Verwendung von weiteren
wasserlöslichen Stärkederivaten zur Verbesserung der
sonstigen Eigenschaften der Putzmassen zu verzichten.

Gegenstand der Erfindung sind somit Gipsmischungen
mit einem Gehalt an nichtionogenen Celluloseethern und
weiteren üblichen Hilfsstoffen und Füllstoffen, welche
dadurch gekennzeichnet sind, daß sie einen zusätzlichen
Gehalt an oxalkylierter und gegebenenfalls noch Carboxymethylgruppen enthaltender Quellstärke aufweisen. Unter
ihnen sind bevorzugt solche Quellstärken, die einen Gehalt
an Oxethyl- und/oder Oxypropylgruppen aufweisen, wobei der
molare Substitutionsgrad (MS) bezüglich dieser Gruppen
zwischen 0,2 und 1,5, insbesondere 0,5 und 1,0 liegt.

Zur Herstellung der zusätzlich zu verwendenden erfindungsgemäßen Quellstärkederivate geht man von üblichen
Stärkesorten aus wie beispielsweise solchen aus Kartoffeln, Mais, Weizen, Reis oder Tapiocawurzel. Aus
praktischen Gründen sind die Kartoffelstärke und die
Maisstärke bevorzugt. Jedoch können prinzipiell auch die
anderen Sorten gegebenenfalls im Gemisch miteinander
eingesetzt werden.

Quellstärke entsteht bekanntlich durch einen hydrolytischen Abbau der Stärke, insbesondere in Gegenwart von
Alkali. Dadurch wird das Stärkekorn destruiert und
die Stärke liegt damit in einem kaltwasserlöslichen Zustand vor. Dieser als Verkleisterung bezeichnete Vorgang verläuft bei Temperaturen von etwa 50 bis 65 °C je nach Stärkesorte und kann sowohl vor als auch nach der Substitution bzw. Oxalkylierung, insbesondere Oxethylierung oder Oxpropylierung der Stärke vorgenommen werden.

Nach einer praktischen Ausführungsform wird die zur Umsetzung bestimmte Stärke mit Alkalihydroxid gemischt. Es kann in verdünnter Form vorliegen oder als festes Natriumhydroxid bzw. Natriumhydroxidhydrat. Im ersten Fall wird die Reaktion in Suspension vorgenommen, während man im zweiten Fall ohne Verwendung von Lösungsmitteln trocken erhitzt. Es ist auf jeden Fall ratsam, die Reaktion als sogenannte Eintopfreaktion durchzuführen und nach dem Zumischen der Lauge und vor dem Erhitzen die Oxalkylierungsmittel zuzusetzen. Die Reaktion läuft bei Temperaturen zwischen etwa 50 und 110 °C, insbesondere 70 und 95 °C, während einer halben bis acht Stunden ab.

Bei Verwendung von leicht flüchtigen Oxalkylierungsmitteln wie dem Propylenoxid und dem Ethylenoxid muß in geschlossenen Behältern unter Druck gearbeitet werden.

Wenn auch der Gehalt von 0,2 bis 1,5 Mol Oxethyl- bzw. Oxypropylgruppen pro Anhydroglucoseeinheit (MS) wesentlich ist, ist es unter Umständen zweckmäßig, zusätzlich Carboxymethylgruppen im Stärkemolekül zu haben. In diesen Fällen wird zweckmäßig die notwendige Menge an G-Salz (Natriumsalz der Monochloressigsäure) dem noch alkalischen Reaktionsgemisch zugefügt. In diesem Falle werden dann bei der Veretherungsreaktion die Carboxymethylgruppen in das Molekül eingebracht. Selbstverständlich ist es auch möglich, die Carboxymethylierung

. . .

zu einem anderen Zeitpunkt durchzuführen. Der Gehalt an Carboxymethylgruppen (DS) kann zwischen 0,05 und 0,5 Mol, vorzugsweise zwischen 0,1 und 0,4 Mol liegen.

Die beanspruchten Gipsmischungen sind nach einer bevorzugten Ausführungsform weiter dadurch gekennzeichnet, daß sie A) die oben beschriebenen Quellstärkeether sowie B) Methylcellulose und/oder Hydroxyalkylmethylcellulose enthalten, wobei das Verhältnis von A : B zwischen 3 : 1 und 1 : 9, insbesondere aber zwischen 1 : 1 und 1 : 9 liegt. Die Einsatzkonzentration dieser Mischungen beträgt 0,05 % bis 1,5 %, vorzugsweise 0,1 % bis 0,8 %, bezogen auf Gips.

Als Grundlage für die mit den erfindungsgemäßen Zutaten versehenen Mischungen eignen sich die üblichen Gipssorten, wie sie von den Herstellern als Basisgips für Maschinenputz oder andere gipshaltige Massen angeboten werden. Im allgemeinen werden nach den Wünschen des Verarbeiters noch die üblichen Hilfsstoffe zugefügt. Unter diesen Hilfsstoffen sind beispielsweise Verzögerer wie Weinsäure oder Citronensäure, sowie Beschleuniger wie Calciumsulfat-Dihydrat und/oder Luftporenbildner zu verstehen. Selbstverständlich ist es auch möglich, Füllstoffe wie Calciumcarbonat oder Quarzsand zuzufügen. Es hat sich als zweckmäßig erwiesen, die Stärkeether im Gemisch mit den nichtionogenen Celluloseethern im vorgenannten Verhältnis zu verwenden.

In diesem Fall addieren sich die Wasserrückhaltevermögen der beiden Produkte. Während das Wasserrückhaltevermögen der Methylcellulose bzw. der MC-Mischether stark temperaturabhängig ist und bei steigender Temperatur rasch absinkt, und das Wasserrückhaltevermögen der beschriebenen Stärkeether von der Temperatur kaum beeinflußt.

Somit weist die Kombination aus Methylcellulose und
Quellstärkeethern bei erhöhten Temperaturen ein besseres
Wasserrückhaltevermögen auf als beispielsweise Methylcellulose alleine bei gleicher Zugabemenge. Die Wirkung
der Stärkederivate ist weitgehend unabhängig vom pH-Wert,
der gipshaltigen Grundmischung, der sie zugesetzt wird.

Die erfindungsgemäßen Mischungen lassen sich sowohl
auf den Putzmaschinen als auch mit der Kelle leicht
verarbeiten und zeigen ein gutes Standvermögen.
Auch bei stark saugenden Untergründen wird kein
Aufbrennen der Masse beobachtet und somit auch die
Rißbildung vermieden.

0117431
HENKEL KGaA
ZR-FE/Patente

## Beispiele

Zwecks Prüfung der Wirksamkeit der erfindungsgemäßen
Zusätze wurde das Wasserrückhaltevermögen (WRV) getestet.

### WRV für Maschinenputz (Testmethode A)

500 g Maschinenputz werden in 300 ml Leitungswasser
(16 ° d.H.) von 20 °C innerhalb 15 Sekunden eingestreut,
dann 30 Sekunden mit einem Krups-Dreimix auf Stufe 2
gerührt und während 15 Sekunden in ein Plastikrohr
eingefüllt. Das Plastikrohr hat einen Durchmesser
von 60 mm und eine Höhe von 80 mm.
Es steht jeweils auf 8 Rundfiltern der Type Schleicher +
Schüll MN 640 m mit 9 cm Durchmesser. Zwischen den
9 cm-Filtern und dem Rohr liegt ein Filter Typ Schleicher
+ Schüll MN 640 m 11 cm Durchmesser. Es wird  1 Minute
abgesaugt. Anschließend wird  der Putz abgegossen und
die Wassermenge gewogen, die von dem 9 cm-Filter aufgesaugt wurde. Der Wert wird umgerechnet auf $g/m^2$. Das WRV
wird angegeben in $g/m^2$, wobei ein niedriger Wert ein
gutes WRV bedeutet.

### WRV für Handputz (Testmethode B)

wie vorher, aber mit einer Quellzeit von 3 Minuten und
einer Saugzeit von 3 Minuten.

Beispiel 1

Es wurde durch Mischung der folgenden Bestandteile eine
Putzmasse hergestellt:

475 g handelsüblicher Gips als Grundlage
für einen Maschinenputz

25 g Kalkhydrat

0,5 g Weinsäure

0,5 g Methylcellulose ( ~ 27 % Methoxylgruppen,
Korndurchmesser 90 % ist kleiner als
0,125 mm, Lösungsviskosität 2 %ig:
7 000 mPa·s, Brookfield 20 $^{\circ}$C, RVT 20 min$^{-1}$)

Durch Anrühren mit 300 g Wasser wurde eine fertige
Putzmischung hergestellt und das WRV zu 541 g/m$^2$ bestimmt.
Zum Vergleich wurde die Menge an Methylcellulose auf das
Doppelte gebracht und ein WRV zu 248 g/m$^2$ gefunden.

Zu der vorstehend wiedergegebenen Putzmasse wurde zusätzlich zur MC noch jeweils 0,5 g verschieden veretherter Quellstärken gegeben und das Wasserrückhaltevermögen
bestimmt. In Abhängigkeit von den Buchstaben a bis e des
Beispiels ist dann angegeben die Substitution mit Alkylenoxid (MS) und gegebenenfalls die mit Carboxymethylgruppen (DS). Es folgt das WRV in g/m$^2$.

## Tabelle 1

| Beispiel | Substituent | MS | DS | WRV g/m$^2$ abgesaugtes Wasser |
|----------|-------------|------|-----|-------------------------------|
| a | Ethylenoxid | 0,4 | – | 465 |
| b | Propylenoxid | 0,35 | – | 361 |
| c | Ethylenoxid | 0,4 | 0,2 | 461 |
| d | Propylenoxid | 0,5 | 0,2 | 378 |
| e | Propylenoxid | 0,6 | 0,4 | 383 |

Vergleichsversuch: 0,1 % Methylcellulose alleine:

WRV 541 g/m$^2$

. . .

0117431

Beispiel 2

Es wurde durch Mischung der folgenden Bestandteile eine
Putzmasse hergestellt:

475 g  handelsüblicher Gips als Grundlage für
einen Maschinenputz

25 g  Kalkhydrat

0,5 g  Weinsäure

0,4 g  Methylhydroxyethylcellulose ( ~26 %
Methoxylgruppen, 6 % Ethylenglykolether,
Korndurchmesser 90 % ist kleiner als
0,125 mm,
Lösungsviskosität 2 %ig: 15 000 mPa·s,
Brookfield 20 °C, RVT 20 min$^{-1}$ )

Durch Anrühren mit 300 g Wasser wurde eine fertige Putzmischung hergestellt und das WRV zu 496 g/m$^2$ bestimmt.
Zum Vergleich wurde die Menge an Methylcellulose auf
das Doppelte gebracht und ein WRV zu 344 g/m$^2$ gefunden.

Zu der vorstehend wiedergegebenen Putzmasse wurde
dann 0,4 g veretherte Quellstärke gegeben und das Wasserrückhaltevermögen bestimmt. Die Quellstärke enthielt
0,5 g Propylenglykolethereinheiten (MS) und 0,2 g Carboxylmethylgruppen (DS). Das WRV nach Methode A betrug
369 g/m$^2$.

Beispiel 3

Zu einer Mischung aus 500 g als Grundlage für Maschinenputz dienenden Gips und 0,5 g Weinsäure wurden verschiedene Mengen an Methylhydroxyethylcellulose gemäß Beispiel 2 (Komponente B) sowie verschiedene Mengen an substituierter Quellstärke gemäß Beispiel 1 d (Komponente A)
gegeben. In der nachfolgenden Tabelle 2 ist in Abhängigkeit von der eingesetzten Menge der beiden Komponenten A
und B das Wasserrückhaltevermögen (Methode A) wiedergegeben.

...

## Tabelle 2

| Komponente A | | Komponente B | | WRV |
|---|---|---|---|---|
| 0,5 | g | 0,25 | g | 648 |
| 0,375 | g | 0,375 | g | 496 |
| 0,25 | g | 0,5 | g | 467 |

## Beispiel 4

Es wurde durch Mischen der folgenden Bestandteile eine Handputzmasse hergestellt:

| 500 | g | Stuckgips |
|---|---|---|
| 0,5 | g | Citronensäure |
| 0,5 | g | Methylcellulose (siehe Beispiel 1) |
| 0,5 | g | Maisquellstärke mit Hydroxypropylgruppen (MS = 0,6) und Carboxymethylgruppen (DS = 0,2) sowie |
| 300 | g | Wasser (d.H. 8) |

Das Wasserrückhaltevermögen betrug 750 $g/m^2$ nach Methode B. Die Putzmasse zeichnet sich gegenüber nur mit Methylcellulose auf das gleiche WRV eingestellten Putzmasse durch ein deutlich verbessertes Standvermögen aus. Sie ließ sich außerdem gegenüber der nur mit Methylcellulose eingestellten Putzmasse auch auf stark saugenden Gipskartonplatten ohne Rißbildung auftragen.

. . .

0117431
HENKEL KGaA
ZR-FE/Patente

Patentansprüche

1) Mischungen auf Basis von Gips mit nichtionischen Celluloseethern und weiteren üblichen Hilfsstoffen bzw. Füllstoffen, gekennzeichnet durch einen zusätzlichen Gehalt an oxalkylierten und gegebenenfalls noch Carboxylmethylgruppen enthaltenden Quellstärken.

2) Gipsmischungen nach Anspruch 1, gekennzeichnet durch einen zusätzlichen Gehalt an Oxyethyl- und/oder Oxypropylgruppen enthaltenden Quellstärken.

3) Gipsmischungen nach Ansprüchen 1 und 2, gekennzeichnet durch einen zusätzlichen Gehalt an Oxyethyl- und/oder Oxypropylgruppen enthaltender Quellstärke in einer Menge von 0,05 % bis 1,5 %, insbesondere 0,1 % bis 0,8 %, bezogen auf Gips.

4) Gipsmischungen nach Ansprüchen 1 bis 3, gekennzeichnet durch einen Gehalt an A) Oxyethyl- und/oder Oxypropylgruppen enthaltender Quellstärke sowie B) Methylcellulose und/oder deren Mischether sowie Hydroxyalkylcellulose, wobei das Verhältnis von A : B zwischen 3 : 1 und 1 : 9, insbesondere 1 : 1 und 1 : 9 liegt.

5) Gipsmischungen nach Ansprüchen 1 bis 4, gekennnzeichnet durch einen Gehalt an zusätzlich 0,05 bis 0,5, vorzugsweise 0,1 bis 0,4 (DS) Carboxylgruppen enthaltender oxalkylierter Quellstärke.